# EUROPEAN PATENT SPECIFICATION

(11) **EP 3 258 786 B1**
(45) Date of publication and mention of the grant of the patent: **21.11.2018**
(21) Application number: 16713074.9
(22) Date of filing: 16.02.2016
(51) Int. Cl.: A21B 1/33, A21B 1/40, F24B 1/02, F24B 5/08, F24C 15/32

(54) **AUTOMATED OVEN FOR COOKING OF BAKERY PRODUCTS AND IN PARTICULAR PIZZA**
AUTOMATISIERTE OFEN ZUM BACKEN VON BACKWAREN, INSBESONDERE PIZZA
FOUR AUTOMATIQUE POUR LA CUISSON DE PRODUITS DE BOULANGERIE ET EN PARTICULIER DE PIZZAS

(30) Priority: 20.02.2015 IT FI20150039
(43) Date of publication of application: 27.12.2017
(73) Proprietor: De Masi, Antonino, 89016 Rizziconi (IT)
(72) Inventor: IAQUINTA, Mario, 87055 San Giovanni in Fiore (CS) (IT)
(74) Representative: Soldatini, Andrea
(86) International application number: PCT/IB2016/050811
(87) International publication number: WO 2016/132283

(56) References cited:
- EP-A1- 0 067 806
- EP-A1- 2 184 545
- EP-A1- 2 439 453
- US-A- 4 805 588
- US-A1- 2005 056 267

## Description

The present invention refers to an automated oven for producing and cooking bakery products, such as pizzas and the like.

Currently, bakery products, and in particular pizzas are prepared by specialised workers such as a pizza chef and cooked in an electric, gas, wood or combination oven.

Usually, it is recognised that wood ovens offer better performance for cooking pizzas particularly in terms of quality of the result obtained and flavour. However, they have a series of drawbacks. For example, great quantities of wood are consumed and therefore it is necessary to have a store. Furthermore, in order to be used, it is necessary to turn on the oven in advance so that it is at the right temperature at the moment of cooking. The cooking times are also long and this increases the waiting time for customers.

It is necessary for the worker to continuously check the oven flame and, moreover, the worker must also take care of cleaning the oven and of disposing of the ashes. Moreover, staying close to the oven for long time periods causes certain discomfort to the worker given that he/she is subjected to the radiation that is emitted at the mouth of the oven. Furthermore, the pizza is manipulated by the worker through a tool called a paddle that is not easy to manipulate due to its length.

Moreover, the wood-cooked pizza could be considered less healthy given that it can come into contact with coals, smoke and other combustion products (like for example food residues left on the cooking surface that are difficult to eliminate and produce substances that are toxic to health, such as benzopyrenes or benzofluoranthenes).

Finally, the wood oven has a substantial problem due to the different way of absorbing and re-emitting the heat between cooking surface and vault. In particular, the heat of the flame tends, by radiation, to heat the vault more than the portion of the cooking surface on which the pizza rests (shielded from the effect of the radiation of the product itself). This implies that the lower part of the pizza needs longer cooking times than the upper part and that the cooking surface cools down. Moreover, the pizza topping (and the dough itself) contain a substantial percentage of water that during cooking evaporates contributing to subtracting heat from the vault. The excess air that enters from the mouth of the oven, kept open to allow the worker to check the cooking of the pizzas and the entry of air (to feed the combustion) even during cooking, also contributes to lowering the temperature of the flame and of the vault. Documents EP 2 184 545 A1, EP 0 067 806 A1, US 2005/056267 A1 and EP 2 439 453 A1 disclose state of the art relevant to the invention.

The object of the oven according to the present invention is to solve the problems described above. In particular, the object of the present invention is to provide an oven that has reduced energy consumption and that does not need specialised workers. Furthermore, the oven according to the invention aims to have optimised and controlled heating in every part thereof.

Another aim is to obtain an oven that is hygienic so that the products cooked in it do not come into contact with polycyclic aromatic hydrocarbons (PAHs) like benzopyrenes or benzofluoranthenes considered by the European Food Safety Authority to increase the risk of tumours.

The object of the oven is also to reduce the preparation times of bakery products with respect to conventional wood ovens. Finally, the oven according to the invention aims to minimise the production of residues like ashes and fumes.

These and other objects are accomplished by the oven according to the invention, the essential characteristics of which are defined by the first of the attached claims.

Further important characteristics are defined by the dependent claims.

The characteristics and advantages of the oven according to the present invention will become clearer from the following description of embodiments thereof, given as a non-limiting example with reference to the attached drawings, in which:
- figure 1 shows a cross section of an oven according to the invention, with which automated preparation means of a pizza are associated;
- figure 2 shows the oven of the previous figure, with a base for a cooking surface of the pizza moved into a rest position, or starting position;
- figure 3 is an enlargement of the oven of figure 2 with the base still in rest position;
- figure 4, on the other hand, shows the base in an intermediate position for the preparation of the base;
- figure 5 shows means for the supplying of sauce, in isolation.

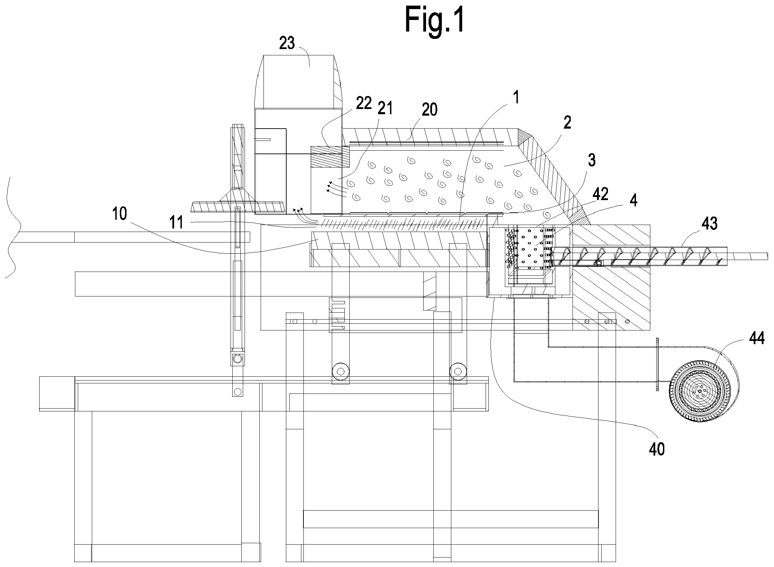

With reference to such figures and in particular to figure 1, the oven comprises a cooking chamber 1 and a combustion chamber 2. The cooking chamber and the combustion chamber are mutually juxtaposed and separated by a semi-transparent wall defined specifically by ceramic glass 3, suitable for withstanding high temperatures. The oven also has a burner 4 housed in a chamber 40 positioned beneath the combustion chamber and beside the cooking chamber in withdrawn position with respect to it. The burner 4 can advantageously be of the known pellet type, thus not described in detail; the chamber 40 is delimited by refractory walls 41. In the figures it is also possible to see an Archimedean screw 43 for feeding the pellets to the burner and the ventilation system 44.

The oven structure described is supported by a suitable foundation, able to be deduced in an obvious manner by those skilled in the art and therefore not described in detail, shown only schematically in the figures.

Going into even greater detail, the cooking chamber is delimited at the bottom by a cooking surface 10 arranged parallel to and opposite the glass 3. The cooking surface is made of metallic material, or of lavastone or firebrick with surfaces treated so as to eliminate or reduce porosity as much as possible. It is also thermostated autonomously through heating means (not shown) that will be discussed in detail hereinafter. The cooking chamber also has a mouth 11 for the insertion of the products to be cooked; a bottom wall of the cooking chamber, opposite the mouth 11, is defined by the wall 41 that delimits the chamber 40. At the top the cooking chamber 1 is delimited by the ceramic glass 3.

The combustion chamber 2 is delimited at the bottom by the ceramic glass 3 and by an opening 42 that leads directly to the chamber 40 of the burner 4 to allow the flame generated by the combustion that occurs in the burner to develop in the combustion chamber; in the latter combustion fumes also develop. At the top and laterally, the combustion chamber is delimited by a vaulted dome 20 that is of constant height above the ceramic glass, and of progressively lower height above the opening 42. At the opposite end with respect to the burner 4, the combustion chamber has a mouth 21 intercepted by valve means to adjust the amount of fumes coming out from the funnel, like for example a butterfly valve 22.

The oven is completely automated since it is managed by electronic means of control and interface, such as a PLC (not shown); in particular, the electronic control means control at least the operation of the burner 4 and of the valve means.

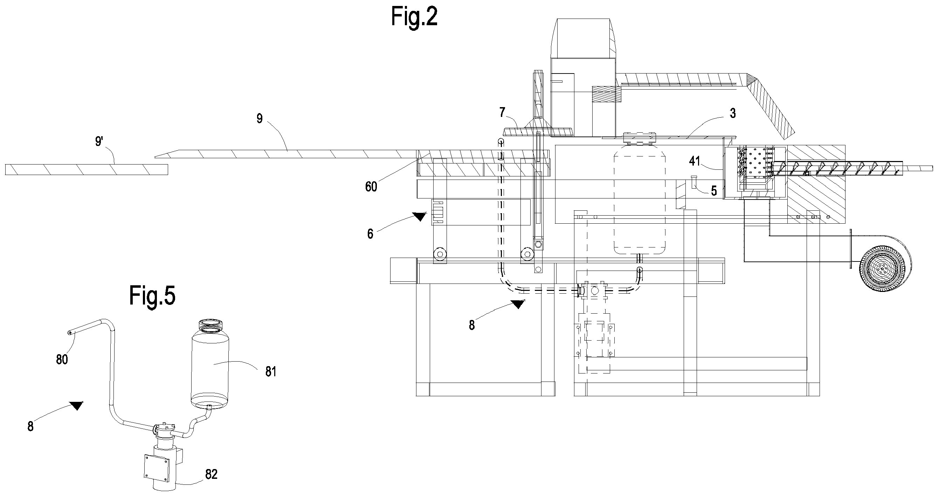

For this purpose, the PLC is connected to sensors 5 (shown schematically in figure 2) that detect the radiance value in the cooking chamber 1. The sensors are of the optical type, such as to receive in the infrared spectrum and in the visible spectrum, and are pointed in the direction of the flame in a position such as not to receive electromagnetic radiation from external sources. Such radiation is determined by the vault 20 of the combustion chamber 2, as well as by the flame and by the ceramic glass itself that, absorbing part of the infrared, retransmits it in the cooking chamber. Therefore, by increasing the temperature of the flame, the heat transmission effect by radiation increases according to the physical law of Stefan Boltzman.

In detail, it is possible to determine the increase in temperature of the flame and vault. Concerning this, the refractory glass 3 prevents the entry of steam produced by the pizza cooking in the combustion chamber (steam that would contribute to decreasing the temperature in the combustion chamber); the glass, by heating up and emitting in the infrared, also acts as a combustion catalysing surface; at the same time, the air in the combustion chamber is introduced in a controlled manner, being dosed and mixed with the fuel, indeed, there is not uncontrolled entry of air like in conventional ovens.

With reference to such a structure, the operation of the oven is as follows.

The burner 4 controlled by the PLC, determines the intensity of the flame in order to obtain a determined radiance value inside the cooking chamber and at the same time also regulates the temperature of the cooking surface 10; consequently, by managing the intensity of the flame, the PLC also determines the amount of gas produced.

Once the oven is started, the PLC receives the analogue value of the radiation sensors 5 in input and therefore consequently determines the opening of the butterfly valve 22 regulating the flow of flame. In particular, the PLC receives, from the radiation sensors 5, an analogue value based on which it sets an intensity of fire that licks the vault and make the butterfly valve open, so as to regulate the time for which the gases remain in the combustion chamber. As soon as the oven is switched on, the radiation by the vault 22 is zero. As the temperature of the vault 20 increases, the level of radiation increases and therefore the reduction in intensity of the fire and also the lesser opening of the butterfly valve 22 is controlled.

By managing the operating parameters of the oven thanks to the PLC it is also possible to determine the cooking times of the product. In particular, as the radiation increases, the cooking time itself decreases.

As illustrated in figures 2 to 5, the oven according to the invention can also be associated with means for the automatic preparation of the pizza. Such means comprise a sliding base 6 that foresees a metallic upper surface 60. The latter can also be made from lavastone or firebrick. Such a base is capable of moving from a rest position to a cooking position where it is directly connected to the cooking chamber. In particular, in such a cooking position the upper surface 60 of the base 6 directly defines the cooking surface 10, thus delimiting, together with ceramic glass and the wall of the burner 4, the cooking chamber 1. The movement of the base can be manual or automatic. In this case, it will be actuated by the same PLC that manages the oven.

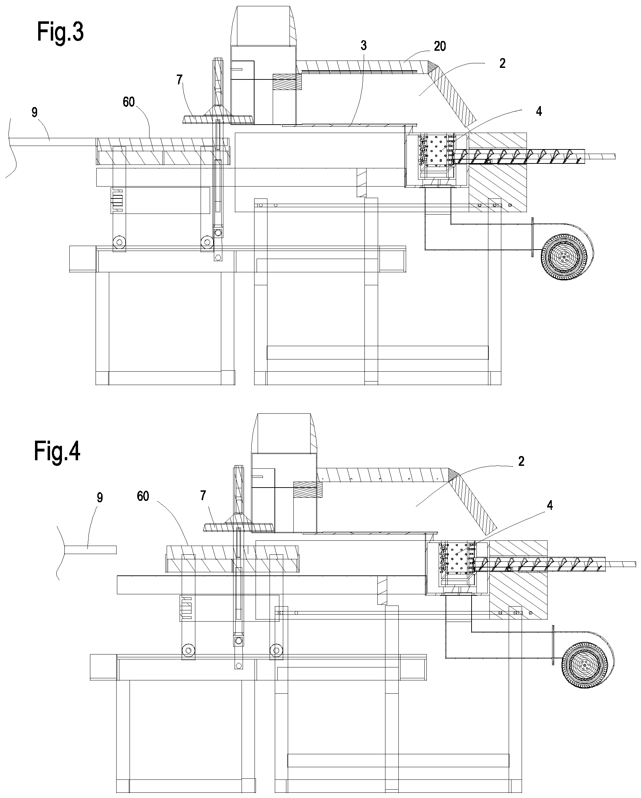

In the rest position (shown in figure 3) the base is in a position directly adjacent to a working plane 9, the usefulness of which will be discussed hereinafter.

Between the rest position and the cooking position, the base can also take up a further stop position, corresponding to the preparation position of the pizza base. At this position (represented in figure 4), i.e. in position juxtaposed over the base, pushing means are arranged such as a heated metal plate 7 (like for example steel) that, by moving in the direction perpendicular to the surface of the base, exerts pressure on a piece of dough arranged on the upper surface 60 of the base 6 itself. Such pressure determines the squashing of the dough that is reduced into a discoid shape to constitute a typical pizza base. The movement of the heated upper plate will also be managed by the PLC.

As stated above, the surface of the base 6 (which indeed defines the surface of the chamber 1 in the cooking position), is heated through an electrical resistance (not shown) arranged beneath it. Moreover, the radiation in the cooking step also contributes to the heating of the surface, determining an energy saving.

The heating of the cooking surface promotes the non-adhesion of the dough to the surface itself and also allows an even and regular cooking of the base.

Finally, at the preparation position of the base there are also delivery means 8 of the sauce, shown in isolation in figure 5 and with a broken line in figure 2. These in particular comprise a spout 80 oriented at the preparation position in order to be able to pour the sauce directly onto the base once prepared. The spout sucks from a reservoir 81 through a pump 82.

Hereinafter the method for obtaining the pizza ready to be served starting from the dough will be described in detail.

In the rest position the operator places the dough at the centre of the surface of the base 6. In the case in which the base is automated, the operator controls the movement thereof, through the PLC, up to the preparation position. Here, the heated upper plate (also automated) squashes the dough to give it the discoid shape and make it a suitable base for a pizza. Possibly, it is possible to control the plate so that it stays pressing on the base long enough to carry out pre-cooking thereof, through the combined effect of the plate itself and of the heated base.

At this point the plate 7 lifts up and, through the delivery means, the sauce is dropped onto the pizza. From the interface of the PLC it is possible to choose the amount of sauce to distribute on the base and also decide the type of sauce. Such an operation can last from 5 to 10 seconds. Thereafter, the base is moved back into the rest position to allow the operator to add the condiments.

Then the base is moved into the cooking position obtaining the cooking of the pizza. Advantageously, the cooking times are very short, of the order of 45/50 seconds.

Once the pizza is cooked the base goes back into the rest position where the pizza is transferred by sliding to the auxiliary surface. For this purpose, the auxiliary surface 9 and the surface of the base 60 are arranged at the same height so that, when the surface of the base is in the rest position, the base of the pizza can be moved from the second to the first by simple sliding. In this way, it is possible to prepare many bases, by leaving them on the auxiliary surface, creating a reserve before proceeding to cooking. In the figures it is also possible to see a further surface 9', bordering the auxiliary surface 9 that, being at a lower height than the auxiliary surface 9, allows the pizza to be moved by sliding directly into the plate.

The oven according to the invention has numerous advantages.

In particular, thanks to the automated management of the burner by the PLC, the oven has low energy consumption and has optimised and controlled heating in every part thereof. Concerning this, by increasing the flame temperature, the ability to transmit heat in the cooking chamber by radiation increases.

Moreover, by managing the flame intensity based on the heat actually necessary to cook the product, the oven manages to minimise the production of residue like ashes and fumes.

The combined action of radiation and autonomous heating of the cooking surface 10 allows the cooking times to be sped up and energy to be saved. Moreover, since it is made from non-porous material, the surface is easy to clean and possible flour residue is completely eliminated (avoiding them being burned during cooking, emitting harmful substances). As well as this, the presence of the glass makes it possible to have a very low vault of the combustion chamber, i.e. very close to the glass itself, with obvious energy saving and an increase in the radiance value.

Moreover, given that the combustion chamber and the chamber of the burner are independent and separate from the cooking chamber, the cooking is healthier, since the product does not come into contact with the combustion residues, such as ashes and fumes, during cooking. The radiation effect determined by the ceramic glass in the cooking chamber accelerates the evacuation of the steam contained in the ingredients of the pizza, which cooks more quickly and stays crispier.

The pre-cooking of the base ensures better cooking and quality of the finished pizza. Moreover, the surface of the base beneath the sauce is also cooked evenly; the dehydration of the base due to the pre-cooking increases the ability of the base to absorb the sauce, avoiding the detachment of the toppings and of the sauce itself from the base. As a function of the squashing pressure of the plate 7 it is also possible to determine the diameter of the pizza base and its thickness.

Furthermore, when the oven is associated with the means for the automatic preparation of the pizza, the preparation and cooking times are drastically reduced, as is the work of the operator. The operator, indeed no longer has to constantly check the various steps of the preparation, meanwhile being able to take care of other tasks, like for example the preparation of the dough to be stored and used later in the preparation and cooking process. The dough is also handled little by the worker and therefore it will be possible to choose doughs even with less strong gluten meshes than those currently used that after cooking are difficult to digest and not crispy.

Possibly, it will also be possible to set the cooking times and the times of each of the single steps of the method described above manually, with the intervention of a worker.

As seen above, the movement of the base can be controlled automatically directly by the PLC or also by the worker by means of one or more pedals. For example, in a variant embodiment, there can be two pedals, a first of which controls the movement of the base from the rest position up to the squashing plate and the return to the return position, whereas a second pedal controls the movement of the base from such a rest position to the cooking position. Thanks to the PLC the oven can be switched on automatically through a timer or can be controlled remotely.

The movement of the base also allows faster and easier cleaning of the upper surface 60.

Furthermore, the worker does not have to pay attention and continuously check the flame and is not subjected to the radiation therefrom.

The oven is thus small in size, such as to be able to be transportable, and, since it is automated, the quality of the pizza is indeed standardisable.

The present invention has been described up to now with reference to preferred embodiments thereof. It should be understood that there can be other embodiments that derive from the same inventive core, all of which are covered by the scope of protection of the claims given below.

## Claims

1. An oven for cooking of bakery products such as in particular pizzas, said oven comprising a cooking chamber (1) in which is placed the product to be cooked and a burner (4) housed within a chamber (40) distinct from said cooking chamber (1), said oven further comprising:
- a combustion chamber (2) separate from said cooking chamber (1), said combustion chamber (2) being connected to said chamber (40) of said burner (4) so that the flame and fumes produced by said burner develop in it, said combustion chamber (2) further providing a funnel (23) for the output of said fumes;
- a semi-transparent wall (3) which divides said combustion chamber (2) from said cooking chamber (1) to allow the radiation from said combustion chamber into said cooking chamber, said radiation contributing to the cooking of the bakery product resting on a cooking surface (10) of said cooking chamber (1);
- means of control and interface such as to control at least the working of said burner, **characterized in that** said oven further comprises:
- valve means (22) to intercept said funnel and adjust the amount of exhaust fumes;
- the means of control and interface are also configured such as to control said valve means (22).

2. The oven according to claim 1, comprising optical sensors (5) such as to receive in the infrared spectrum and the visible spectrum, for detecting the radiation within said cooking chamber (1), said sensors communicating with said means of control and interface.

3. The oven according to claim 1 or 2, wherein said valve means comprise a butterfly valve.

4. The oven according to any of the previous claims, wherein said cooking surface (10) of said cooking chamber (1) is heated through heating means such as electrical heater.

5. The oven according to claim 4, wherein said cooking surface (10) is parallel and spaced whit respect to said semi-transparent wall (3), said cooking chamber (1) being then delimited, together with said semi-transparent wall and said cooking surface, to a bottom wall defined by a wall of said chamber (40) of said burner (4), opposite to said bottom wall being open a mouth for the introduction of said bakery product to be cooked.

6. The oven according to claim 5, wherein said cooking chamber (1) is placed alongside said chamber of said burner (4), said combustion chamber (2) being superimposed on said cooking chamber (1) and said chamber (40), the latter being in communication with said combustion chamber (2) by means of an opening (42), said combustion chamber being further delimited at the top and laterally by a vaulted dome of decreasing height in correspondence of said opening (42) .

7. The oven according to any of the previous claims, further comprising means for the automatic preparation of a pizza comprising at least: - a sliding base (6) which includes a upper surface (60), said base being movable between a rest position and a cooking position in which said upper surface (60) defines said cooking surface (10) of said cooking chamber (1); - pushing means adapted to translate in a direction perpendicular to said upper surface (60) so as to achieve the pushing in a discoid shape of a piece of dough resting on said upper surface when said sliding base (6) is in an intermediate position.

8. The oven according to claim 7, wherein at least the moving of said sliding base (6) and of said pushing means is driven by said means of control and interface.

9. The oven according to claim 7 or 8, wherein said means for the automatic preparation further comprise means for the supplying of sauce, said means for the supplying of sauce comprising a spout (80), a reservoir (81) for the containment of the sauce and a pump (82) for suction said sauce from said reservoir.

10. The oven according to claim 9, wherein also said means for the supplying of sauce are driven by said means of control and interface.

11. The oven according any of claims from 7 to 10, wherein said sliding base comprise heating means of said upper surface (60), said heating means being of electrical type.

12. The oven according to claim 11, wherein said pushing means comprise a plate (7) adapted to be heated.

13. The oven according to any of the claims from 7 to 12, wherein in said rest position said sliding base (6) is adjacent to a working plane (9), said working plane (9) and said upper surface (60) being aligned so as to permit the displacement of the pizza by sliding.

14. A method for the preparation and the cooking of a pizza by means the oven according any of the previous claims, said method comprising the following steps:
- preparing a dough ball on a upper surface (60) of a sliding base (6) when said base is in a rest position;
- moving said sliding base (6) in an intermediate position in which it is in correspondence with pushing means (7);
- moving said pushing means (7) against said dough in order to reduce it, due to the pressure exerted by said pushing means, in a discoid shape;
- delivering through supplying means (8) a sauce on said disc-shaped dough;
- returning said sliding base (6) in said rest position to allow a worker to add any additional seasonings;
- moving said base in a cooking position in which said upper surface (60) defines a cooking surface (10) of a cooking chamber (1) of said oven;
- before, after or during the previous step turning on a burner (4) placed in a chamber (40) adjacent to said cooking chamber and in communication with a combustion chamber (2), the latter and said cooking chamber being separated by means of a semi-transparent wall (3);
- detecting by means of sensors (5) the radiance value transferred from said combustion chamber (2) within said cooking chamber (1) through said semi-transparent wall (3);
- adjust the intensity of the heat produced by said burner (4) based on said detection of radiation.

15. The method according to claim 14, wherein said steps are supervised by means of control and interface as a PLC.

## Patentansprüche

1. Ofen zum Backen von Backwaren, so wie insbesondere Pizza, wobei der Ofen enthält einen Backkammer (1), in der das Produkt platziert wird, das gebacken werden soll, und einen Brenner (4), der innerhalb einer Kammer (40) untergebracht ist, die von der Backkammer (1) verschieden ist, wobei der Ofen ferner enthält:
- eine Feuerungskammer (2) separat von der Backkammer (1), wobei die Feuerungskammer (2) mit der Kammer (40) des Brenners (4) verbunden ist, so dass die Flamme und Rauchgase, die von dem Brenner erzeugt wurden, sich in sie hinein entwickeln, wobei die Feuerungskammer (2) ferner einen Kamin (23) für die Ausgabe der Rauchgase bereitstellt;
- eine semitransparente Wand (3), die die Feuerungskammer (2) von der Backkammer (1) abteilt, um die Strahlung von der Feuerungskammer in die Backkammer zu gestatten, wobei die Strahlung zu dem Backen der Backware beiträgt, die auf einer Backoberfläche (10) der Backkammer (1) aufliegt;
- Einrichtungen der Steuerung und Verbindung, um wenigstens den Betrieb des Brenners zu steuern,
**dadurch gekennzeichnet, dass** der Ofen ferner enthält:
- Ventileinrichtungen (22) zum Unterbrechen des Kamins und Einstellen der Menge von Abgas-Rauchgasen;
- wobei die Einrichtungen der Steuerung und Verbindung auch derart konfiguriert sind, um die Ventileinrichtungen (22) zu steuern.

2. Ofen nach Anspruch 1, enthaltend optische Sensoren (5), derart, um in dem infraroten Spektrum und in dem sichtbaren Spektrum zu empfangen, um die Strahlung innerhalb der Backkammer (1) zu detektieren, wobei die Sensoren mit den Einrichtungen der Steuerung und Verbindung kommunizieren.

3. Ofen nach Anspruch 1 oder 2, wobei die Ventileinrichtungen ein Schmetterlingsventil enthalten.

4. Ofen nach einem der vorhergehenden Ansprüche, wobei die Backoberfläche (10) der Backkammer (1) durch Heizeinrichtungen, wie elektrische Heizer, geheizt wird.

5. Ofen nach Anspruch 4, wobei die Backoberfläche (10) parallel und beabstandet ist in Bezug auf die semitransparente Wand (3), wobei die Backkammer (1) dann zusammen mit der semitransparenten Wand (3) und der Backoberfläche zu einer Bodenwand abgegrenzt ist, die durch eine Wand der Kammer (40) definiert ist, wobei gegenüber liegend zu der Bodenwand eine Mündung für die Einführung der Backware offen ist, die gebacken werden soll.

6. Ofen nach Anspruch 5, wobei die Backkammer (1) längs der Kammer des Brenners (4) platziert ist, wobei die Feuerungskammer (2) auf der Backkammer (1) und der Kammer (40) überlagert, wobei die letztere mittels einer Öffnung (42) in Kommunikation mit der Feuerungskammer (2) ist, wobei die Feuerungskammer (2) ferner oben und seitlich durch eine gewölbte Kuppel von sich verringernder Höhe in Korrespondenz zu der Öffnung (42) abgegrenzt ist.

7. Ofen nach einem der vorhergehenden Ansprüche, wobei ferner Einrichtungen zur automatischen Vorbereitung einer Pizza enthalten sind, enthaltend wenigstens: - eine verschiebbare Basis (6), die eine obere Oberfläche (60) enthält, wobei die Basis zwischen einer Ruheposition und einer Backposition beweglich ist, in der die obere Oberfläche (60) die Backoberfläche (10) der Backkammer (1) definiert; - Schiebeeinrichtungen, die ausgelegt sind, um in einer Richtung senkrecht zu der oberen Oberfläche (60) zu versetzen, um das Schieben eines Stückes von Teig, das auf der oberen Oberfläche liegt, in einer diskoidalen Form zu erzielen, wenn die verschiebbare Basis (6) in einer Zwischenposition ist.

8. Ofen nach Anspruch 7, wobei wenigstens das Bewegen der verschiebbaren Basis (6) und der Schiebeeinrichtungen durch die Einrichtungen der Steuerung und Verbindung betrieben wird.

9. Ofen nach Anspruch 7 oder 8, wobei die Einrichtungen für die automatische Vorbereitung ferner enthalten Einrichtungen für die Zufuhr von Soße, wobei die Einrichtungen für die Zufuhr von Soße enthält einen Ausguss (80), ein Reservoir (81) für die Aufnahme der Soße und eine Pumpe (82) zum Saugen der Soße aus dem Reservoir.

10. Ofen nach Anspruch 9, wobei die Einrichtungen für die Zufuhr von Soße durch die Einrichtungen der Steuerung und Verbindung betrieben werden.

11. Ofen nach einem der Ansprüche 7 bis 10, wobei die verschiebbare Basis Heizeinrichtungen der oberen Oberfläche (60) enthält, wobei die Heizeinrichtungen vom elektrischen Typ sind.

12. Ofen nach Anspruch 11, wobei die Schiebeeinrichtungen eine Platte (7) enthalten, die ausgelegt sind, um geheizt zu werden.

13. Ofen nach einem der Ansprüche 7 bis 12, wobei in der Ruheposition die verschiebbare Basis (6) benachbart einer Arbeitsebene (9) ist, wobei die Arbeitsebene (9) und die obere Oberfläche (60) ausgerichtet sind, um das Versetzen der Pizza durch Verschieben zu gestatten.

14. Verfahren zum Herrichten und Backen einer Pizza mittels des Ofens nach einem der vorhergehenden Ansprüche, wobei das Verfahren die folgenden Schritte enthält:
- Vorbereiten einer Teigkugel auf einer oberen Oberfläche (60) einer verschiebbaren Basis (6), wenn die Basis in einer Ruheposition ist;
- Bewegen der verschiebbaren Basis (6) in einer Zwischenposition, in der sie in Korrespondenz mit Schiebeeinrichtungen (7) ist;
- Bewegen der Schiebeeinrichtungen (7) gegen die Teigkugel, um sie aufgrund des Druckes, der durch die Schiebeeinrichtungen ausgeübt wird, in eine diskoidale Form zu reduzieren;
- Zuführen einer Soße auf den scheibenförmigen Teig durch Zufuhreinrichtungen (8);
- Zurückführen der verschiebbaren Basis (6) in die Ruheposition, um es einem Arbeiter zu gestatten, jegliche zusätzlichen Würzungen hinzuzufügen;
- Bewegen der Basis in eine Backposition, in der die obere Oberfläche (60) eine Backoberfläche (10) einer Backkammer (1) des Ofens definiert;
- vor, nach oder während des vorhergehenden Schrittes Einschalten eines Brenners (4), der in einer Kammer (40) benachbart zu der Backkammer und in Kommunikation mit einer Feuerungskammer (2) ist, wobei letztere und die Backkammer mittels einer semitransparenten Wand (3) separiert sind;
- Detektieren des Strahlungswertes, der von der Feuerungskammer (2) übertragen wurde, mittels Sensoren (5) innerhalb der Backkammer (1) durch die semitransparente Wand (3);
- Einstellen der Intensität der Hitze, die von dem Brenner (4) erzeugt wird, basierend auf der Detektion der Strahlung.

15. Verfahren nach Anspruch 14, wobei die Schritte mittels einer Steuerung und Verbindung als eine PLC kontrolliert werden.

## Revendications

1. Un four pour la cuisson de produits de boulangerie tels que notamment des pizzas, ledit four comprenant une chambre de cuisson (1) dans laquelle est placé le produit à cuire et un brûleur (4) logé dans une chambre (40) distincte de ladite chambre de cuisson (1), ledit four comprenant en outre :
- une chambre de combustion (2) séparée de ladite chambre de cuisson (1), ladite chambre de combustion (2) étant reliée à ladite chambre (40) dudit brûleur (4) de façon que la flamme et les fumées produites par ledit brûleur s'y développent, ladite chambre de combustion (2) étant en outre munie d'une cheminée (23) pour l'évacuation desdites fumées ;
- une paroi semi-transparente (3) qui sépare ladite chambre de combustion (2) de ladite chambre de cuisson (1) pour permettre le rayonnement provenant de ladite chambre de combustion de pénétrer dans ladite chambre de cuisson, ledit rayonnement contribuant à la cuisson du produit de boulangerie reposant sur une surface de cuisson (10) de ladite chambre de cuisson (1) ;
- des moyens de commande et d'interface pour commander au moins le fonctionnement dudit brûleur, **caractérisé en ce que** ledit four comprend en outre :
- des moyens de soupape (22) pour couper ladite cheminée et ajuster la quantité de fumées évacuées ; et que
- les moyens de commande et d'interface sont également configurés pour commander lesdits moyens de soupape (22).

2. Le four selon la revendication 1, comprenant des capteurs optiques (5) aptes à capter dans le spectre infrarouge et le spectre visible, pour détecter le rayonnement à l'intérieur de ladite chambre de cuisson (1), lesdits capteurs communiquant avec lesdits moyens de contrôle et d'interface.

3. Le four selon l'une des revendications 1 et 2, dans lequel lesdits moyens de soupape comprennent une vanne papillon.

4. Le four selon l'une quelconque des revendications précédentes, dans lequel ladite surface de cuisson (10) de ladite chambre de cuisson (1) est chauffée via des moyens de chauffage tel qu'un dispositif de chauffage électrique.

5. Le four selon la revendication 4, dans lequel ladite surface de cuisson (10) est parallèle et espacée par rapport à ladite paroi semi-transparente (3), ladite chambre de cuisson (1) étant de ce fait délimitée, avec ladite paroi semi-transparente et ladite surface de cuisson, par une paroi de fond définie par une paroi de ladite chambre (40) dudit brûleur (4), et présentant une ouverture pour l'introduction dudit produit de boulangerie à cuire, celle-ci étant opposée à ladite paroi de fond.

6. Le four selon la revendication 5, dans lequel ladite chambre de cuisson (1) est placée le long de ladite chambre dudit brûleur (4), ladite chambre de combustion (2) étant superposée à ladite chambre de cuisson (1) et à ladite chambre (40), cette dernière étant en communication avec ladite chambre de combustion (2) au moyen d'une ouverture (42), ladite chambre de combustion étant en outre délimitée à son sommet et latéralement par un dôme en voûte de hauteur décroissante en regard de ladite ouverture (42).

7. Le four selon l'une quelconque des revendications précédentes, comprenant en outre des moyens pour la préparation automatique d'une pizza comprenant au moins :
- une base coulissante (6) qui comporte une surface supérieure (60), ladite base étant mobile entre une position de repos et une position de cuisson dans laquelle ladite surface supérieure (60) définit ladite surface de cuisson (10) de ladite chambre de cuisson (1) ; et
- des moyens de poussée adaptés pour se translater selon une direction perpendiculaire à ladite surface supérieure (60) de façon à obtenir la poussée, dans une forme de disque, d'un morceau de pâte reposant sur ladite surface supérieure quand ladite base coulissante (6) est dans une position intermédiaire.

8. Le four selon la revendication 7, dans lequel au moins le déplacement de ladite base coulissante (6) et desdits moyens de poussée est piloté par lesdits moyens de commande et d'interface.

9. Le four selon l'une des revendications 7 et 8, dans lequel lesdits moyens pour la préparation automatique comprennent en outre des moyens pour délivrer de la sauce, lesdits moyens pour délivrer de la sauce comprenant un bec verseur (80), un réservoir (81) pour contenir la sauce et une pompe (82) pour aspirer ladite sauce dudit réservoir.

10. Le four selon la revendication 9, dans lequel aussi lesdits moyens d'alimentation en sauce sont pilotés par lesdits moyens de commande et d'interface.

11. Le four selon l'une quelconque des revendications 7 à 10, dans lequel ladite base coulissante comprend des moyens de chauffage de ladite surface supérieure (60), lesdits moyens de chauffage étant du type électrique.

12. Le four selon la revendication 11, dans lequel lesdits moyens de poussée comprennent une plaque (7) adaptée pour être chauffée.

13. Le four selon l'une quelconque des revendications 7 à 12, dans lequel, dans ladite position de repos, ladite base coulissante (6) est adjacente à un plan de travail (9), ledit plan de travail (9) et ladite surface supérieure (60) étant alignés pour permettre le déplacement de la pizza par glissement.

14. Un procédé pour la préparation et la cuisson d'une pizza au moyen d'un four selon l'une quelconque des revendications précédentes, ledit procédé comprenant les étapes consistant à :
- préparer une boule de pâte sur une surface supérieure (60) d'une base coulissante (6) quand ladite base est en position de repos ;
- déplacer ladite base coulissante (6) dans une position intermédiaire dans laquelle elle est en correspondance avec des moyens de poussée (7) ;
- déplacer lesdits moyens de poussée (7) contre ladite pâte afin de la réduire en forme de disque, par la pression exercée par lesdits moyens de poussée ;
- délivrer, par des moyens d'alimentation (8), une sauce sur ladite pâte en forme de disque ;
- ramener ladite base coulissante (6) dans ladite position de repos pour permettre à un employé d'ajouter tout assaisonnement supplémentaire ;
- déplacer ladite base dans une position de cuisson dans laquelle ladite surface supérieure (60) définit une surface de cuisson (10) d'une chambre de cuisson (1) dudit four ;
- avant, après ou pendant l'étape précédente : allumer un brûleur (4) placé dans une chambre (40) adjacente à ladite chambre de cuisson et en communication avec une chambre de combustion (2), cette dernière et ladite chambre de cuisson étant séparées par une paroi semi-transparente (3) ;
- détecter, au moyen de capteurs (5), la valeur du rayonnement transféré de ladite chambre de combustion (2) vers l'intérieur de ladite chambre de cuisson (1) à travers ladite paroi semi-transparente (3) ;
- ajuster l'intensité de la chaleur produite par ledit brûleur (4) en fonction de ladite détection de rayonnement.

15. Le procédé selon la revendication 14, dans lequel lesdites étapes sont supervisées par des moyens de commande et d'interface tels qu'un PLC.
